# EUROPÄISCHE PATENTANMELDUNG

(11) **EP 2 273 176 A1**
(43) Veröffentlichungstag der Anmeldung: **12.01.2011**
(21) Anmeldenummer: 10175425.7
(22) Anmeldetag: 26.02.2009
(51) Int. Cl.: F16L 37/092

(54) **Steckkupplung für Rohre, sowie Kupplungseinrichtung mit wenigstens zwei solchen Steckkupplungen**

(30) Priorität: 24.09.2008 DE 102008048658
(62) Teilanmeldung aus: 09002779.8
(71) Anmelder: FRÄNKISCHE ROHRWERKE GEBR. KIRCHNER GmbH & Co KG, 97486 Königsberg (DE)
(72) Erfinder: Welsch, Thomas, 97437, Haßfurt (DE)
(74) Vertreter: Herzog, Markus

(57) **Zusammenfassung**

Eine Steckkupplung (20) für ein Rohr (12), umfasst einen Grundkörper (22;122) mit einem Rohrstutzen (24), eine Außenhülse (30;130), die zumindest teilweise um den Grundkörper (22;122) herum angeordnet ist und mit diesem einen Aufnahmeraum (32;132) bildet, in welchen das Rohr (12;112) einführbar ist, eine Klemmvorrichtung (40;140) mit wenigstens einem Klemmelement (44;144), und eine Schiebevorrichtung (46;146), welche durch ein in den Aufnahmeraum (32;132) eingeführtes Rohr (12;112) in eine Anlagestellung überführbar ist, in welcher sie an einer Ringschulter (28;128) des Grundkörpers (22;122) anliegt, wobei die Außenhülse (30;130) wenigstens eine Öffnung (36;136) aufweist, wobei die Öffnung (36;136) derart bemessen ist, dass die Schiebevorrichtung (46;146) dann, wenn sie sich in ihrer Anlagestellung befindet, die Öffnung (36;136) zumindest teilweise überlappt, wobei der Kontrast zwischen Schiebevorrichtung (46;146) und Außenhülse (30;130) durch eine entsprechende Wahl der Farben von Schiebevorrichtung (46;146) und Außenhülse (30;130) sichergestellt ist.

## Beschreibung

Die Erfindung betrifft eine Steckkupplung für ein Rohr, umfassend einen Grundkörper mit einem Rohrstutzen, der zum Einführen in einen Endabschnitt des Rohrs bestimmt ist, und mit einer Ringschulter, welche an einem dem freien Ende des Rohrstutzens abgewandten Ende des Rohrstutzens vorgesehen ist, eine Außenhülse, die zumindest teilweise um den Grundkörper herum angeordnet ist und mit diesem einen Aufnahmeraum bildet, in welchen das Rohr einführbar ist, und eine Klemmvorrichtung mit wenigstens einem Klemmelement, welches dazu bestimmt ist, mit einem in den Aufnahmeraum eingeführten Rohr von außen derart in Eingriff zu treten, dass es sich einer Bewegung des Rohrs aus dem Aufnahmeraum heraus widersetzt.

Derartige Steckkupplungen werden beispielsweise in der Haustechnik im Heizungs- und Sanitärbereich zum Kuppeln von Kalt- und Warmwasserleitungen oder auch zum Kuppeln von Druckluftleitungen oder dergleichen Leitungen eingesetzt. Sie eignen sich aber auch zum direkten Anschluss an einen Verteiler, beispielsweise einer Fußbodenheizung. Ziel ist es stets, die Verbindung einfach und schnell herzustellen. Die Steckkupplungen können als reine Steckverbinder ausgebildet sein. Es ist jedoch auch möglich, die Rohre nach dem Einstecken zusätzlich durch Verpressen zu befestigen.

Derartige Steckkupplungen sind allgemein bekannt. Lediglich beispielhaft sei auf die DE 10 2007 010 164 B3 und die DE 102 21 971 A1 verwiesen. An diesem Stand der Technik ist Folgendes nachteilig:
Das wenigstens eine Klemmelement muss dem Rohr radial ausweichen können, wenn dieses in den Aufnahmeraum eingeführt wird. Andernfalls würde das Klemmelement eine Axialkerbe in das Rohr schneiden, welche den sicheren Halt des Rohrs gegen ein unerwünschtes Herausziehen aus der Steckkupplung gefährden würde. Zur Ermöglichung dieser Ausweichbewegung muss ein entsprechender radialer Abstand zwischen der Klemmvorrichtung und der Außenhülse vorgesehen werden. Dies hat zur Folge, dass das Rohrende dann, wenn es vollständig in die Steckkupplung eingeschoben ist, ein radiales Spiel relativ zur Außenhülse aufweist. Bei dem vorstehend genannten Stand der Technik wird dieses Spiel erst dann aufgehoben, d.h. wird die Klemmvorrichtung erst dann relativ zur Außenhülse zentriert, wenn die Klemmvorrichtung gegen eine innere Schrägfläche der Außenhülse anläuft. Hierzu ist aber eine gewisse Auszugsbewegung des Rohrs aus der Steckkupplung heraus erforderlich. Dies ist nachteilig.

Zu berücksichtigen ist ferner, dass die in den vorstehend genannten Anwendungsfällen zum Einsatz kommenden Rohre steif ausgebildet sind und sich, anders als beispielsweise die allgemein bekannten Gartenschläuche, nicht ausdehnen können, wenn sie über den Rohrstutzen des Grundkörpers geschoben werden. Daher muss zwischen Rohr und Rohrstutzen ein die jeweiligen Fertigungstoleranzen berücksichtigendes Spiel vorgesehen sein. Kommt zu diesem zwangsläufig vorhandenen Spiel das vorstehend beschriebene Spiel hinzu, so führt dies zu einer labilen Anordnung des Rohrs innerhalb der Steckkupplung, die die Dichtigkeit und somit die Betriebssicherheit der Steckkupplung gefährdet.

Demgegenüber ist es Aufgabe der vorliegenden Erfindung, eine Steckkupplung der eingangs genannten Art bereitzustellen, bei welcher die Klemmvorrichtung in dem vollständig in den Aufnahmeraum eingeführten Zustand des Rohrs relativ zur Außenhülse zentriert ist, obgleich das wenigstens eine Halteelement relativ zur Außenhülse mit Spiel angeordnet ist.

Diese Aufgabe wird erfindungsgemäß durch eine Steckkupplung der eingangs genannten Art gelöst, welche ferner eine Schiebevorrichtung umfasst, welche durch ein in den Aufnahmeraum eingeführtes Rohr in eine Anlagestellung überführbar ist, in welcher sie an der Ringschulter des Grundkörpers anliegt, wobei die Schiebevorrichtung in dieser Anlagestellung die Klemmvorrichtung an der Außenhülse zentriert. Da die Schiebevorrichtung erst im Zuge des Einführens eines Rohrs in den Aufnahmeraum in die Anlagestellung übergeführt wird, braucht die Zentrierung der Klemmvorrichtung relativ zur Außenhülse dann, wenn das Rohr mit der Klemmvorrichtung in Kontakt tritt, noch nicht vorzuliegen, was das In-Eingriff-Treten von Rohr und Klemmvorrichtung erleichtert. Besonders vorteilhaft ist es dabei, wenn die Außenhülse, die Klemmvorrichtung und die Schiebevorrichtung derart aufeinander abgestimmt sind, dass die Schiebevorrichtung auf die Klemmvorrichtung eine die Klemmvorrichtung an der Außenhülse haltende Klemmkraft ausübt.

Die Schiebevorrichtung umfasst vorteilhafterweise einen in Umfangsrichtung verlaufenden Körper, der in der Anlagestellung der Schiebevorrichtung der Zentrierung der Klemmvorrichtung relativ zur Außenhülse dient, sowie wenigstens einen von dem Körper ausgehenden Vorsprung, der zum Eingriff mit dem Rohr bestimmt ist. Der in Umfangsrichtung verlaufende Körper kann beispielsweise von einem Ring, vorzugsweise einem Vollring, gebildet sein.

Dabei kann der Körper der Schiebevorrichtung radial zwischen der Klemmvorrichtung und der Außenhülse angeordnet sein, wobei der wenigstens eine von dem Körper ausgehende Vorsprung eine zugeordnete Durchbrechung der Klemmvorrichtung durchsetzen kann. Auf diese Weise können sowohl die Klemmvorrichtung als auch die Außenhülse eine einfache, nämlich vorteilhafterweise im Wesentlichen zylindrische, Gestalt aufweisen, wobei gleichzeitig ausreichend Bauraum für die vorstehend erläuterte Ausweichbewegung des wenigstens einen Klemmelements vorhanden ist.

Um einen sicheren Eingriff mit dem in den Aufnahmeraum eingeführten Rohr gewährleisten zu können, kann an dem freien Ende wenigstens eines Vorsprungs ein weiterer in Umfangsrichtung verlaufender Körper angeordnet sein. Dabei kann auch der weitere in Umfangsrichtung verlaufende Körper von einem Ring, vorzugsweise einem Vollring, gebildet sein. Durchsetzt der wenigstens eine Vorsprung eine zugeordnete Durchbrechung der Klemmvorrichtung, so nehmen die beiden in Umfangsrichtung verlaufenden Körper die Klemmvorrichtung zwischen sich auf. Ferner kann der weitere in Umfangsrichtung verlaufende Körper eine Mehrzahl der Vorsprünge, vorzugsweise alle Vorsprünge, miteinander verbinden.

Wenn sich die Durchbrechung zu dem der Ringschulter zugewandten Ende der Klemmvorrichtung hin öffnet, so kann im vormontierten, aber noch nicht mit einem Rohr verbundenen Zustand der Steckkupplung verhindert werden, dass sich die Schiebevorrichtung ungewollt von der Klemmvorrichtung löst, was ihre Funktionssicherheit gefährden würde. Grundsätzlich ist es jedoch auch denkbar, dass sich die Durchbrechung zu dem von der Ringschulter abgewandten Ende der Klemmvorrichtung öffnet. In diesem Fall könnte die Durchbrechung gleichzeitig zur Trennung von zwei benachbarten Klemmelementen dienen.

Die vorstehend angesprochene Funktionssicherheit kann unabhängig von der genauen Art der Ausbildung von Klemmvorrichtung und Schiebevorrichtung auch dadurch erzielt werden, dass die Schiebevorrichtung an der Klemmvorrichtung in einer Ausgangsstellung verrastbar ist, aus welcher es durch das Rohr bei dessen Einführung in den Aufnahmeraum herausbewegbar ist. Unabhängig davon, ob die Schiebevorrichtung in der Ausgangsstellung verrastbar ist oder nicht, ist es vorteilhaft, wenn sie die Klemmvorrichtung auch in der Ausgangsstellung relativ zur Außenhülse zentriert, da hierdurch ein Verkanten der Klemmvorrichtung beim Einführen des Rohrs zumindest erschwert, wenn nicht gar vollständig verhindert werden kann.

In Weiterbildung der Erfindung wird vorgeschlagen, dass die Schiebevorrichtung in der Anlagestellung an dem Grundkörper oder/und der Außenhülse verrastbar ist. Auf diese Weise kann die von der Schiebevorrichtung ausgehenden Zentrierwirkung auch in dem auf das Einführen des Rohrs folgenden Betrieb der Steckkupplung sichergestellt werden. Hierzu kann beispielsweise im Grundkörper eine Rastausnehmung vorgesehen sein, mit welcher die Schiebevorrichtung, vorzugsweise wenigstens einer der Vorsprünge der Schiebevorrichtung oder wenigstens ein Abschnitt des weiteren in Umfangsrichtung verlaufenden Körpers, verrastbar ist. Zusätzlich oder alternativ ist es aber auch denkbar, die Schiebevorrichtung, vorzugsweise der Körper der Schiebevorrichtung, in axialer Richtung zur Ringschulter hin erweitert auszubilden, wobei diese Erweiterung mit einer entsprechend ausgebildeten Erweiterung der Außenhülse zusammenwirkt.

Wenn die Außenhülse wenigstens eine Öffnung aufweist, welche in dem auf dem Grundkörper montierten Zustand der Außenhülse der Ringschulter benachbart angeordnet ist, und diese Öffnung derart bemessen ist, dass die Schiebevorrichtung dann, wenn sie sich in ihrer Anlagestellung befindet, die Öffnung zumindest teilweise überlappt, so kann die Schiebevorrichtung noch eine weitere Funktion übernehmen, nämlich die Funktion der Anzeige, dass das Rohr ordnungsgemäß und weit genug in den Aufnahmeraum eingeführt worden ist. Derartige Anzeigeöffnungen sind zwar aus dem Stand der Technik an sich bekannt. Üblicherweise gewähren sie aber einen unmittelbaren Blick auf das Rohr. Dies kann nachteilig sein, weil nicht sichergestellt ist, dass jedes auf dem Markt erhältliche Rohr einen ausreichenden Kontrast zu der Außenhülse aufweist, um eine zuverlässige Anzeige zu gewährleisten. Erfindungsgemäß kann dieser ausreichende Kontrast unabhängig von dem verwendeten Rohr durch eine entsprechende Wahl der Farben von Schiebevorrichtung und Außenhülse in einfacher Weise sichergestellt werden.

Eine zusätzliche Sicherheit gegen ein unbeabsichtigtes Herausziehen des Rohrs aus der Steckkupplung kann dadurch bereitgestellt werden, dass die Außenhülse zwischen ihrem freien Ende und ihrem mit dem Grundkörper verbundenen Ende einen sich zum freien Ende hin verjüngenden Abschnitt aufweist. Sollte auf das Rohr eine so hohe Auszugskraft ausgeübt werden, dass es sich unter Mitnahme der Klemmvorrichtung in Richtung des freien Endes der Außenhülse bewegt, so tritt das wenigstens eine Klemmelement mit dem sich verjüngenden Abschnitt in Eingriff und übt hierdurch eine noch stärkere Klemmkraft auf das Rohr aus.

Um die Führung des Rohrs in dem Aufnahmeraum verbessern zu können, kann die Außenhülse ihrem freien Ende benachbart einen im Wesentlichen zylindrisch ausgebildeten Abschnitt aufweisen.

Um das Einführen des Rohrs in den Aufnahmeraum erleichtern zu können, kann die Außenhülse an ihrem freien Ende einen sich zum freien Ende hin erweiternden Abschnitt aufweisen.

Ferner kann die Außenhülse zur Erleichterung ihrer Montage an dem Grundkörper an ihrem von ihrem freien Ende abgewandten, anderen Ende mit wenigstens einem Eingriffselement ausgebildet ist, welches zum Eingriff mit dem Grundkörper bestimmt ist.

Nachzutragen ist noch Folgendes: Die Klemmvorrichtung ist vorteilhafterweise aus Metall gebildet, beispielsweise Edelstahl. Sie kann als einstückig ausgebildete Klemmhülse hergestellt sein, beispielsweise durch Tiefziehen. Es ist aber auch möglich, sie durch Stanzen und Walzen, beispielsweise eines Blechstreifens, herzustellen, wobei sie in diesem Fall eine axial geschlitzte Gestalt aufweist. Schließlich ist es auch denkbar, dass die Klemmvorrichtung aus einer Mehrzahl von Klemmsegmenten zusammengesetzt ist, welche ebenfalls durch Stanzen und Walzen hergestellt sind. Die Schiebevorrichtung kann sowohl aus Metall, beispielsweise Aluminium oder einer Aluminiumlegierung, als auch aus Kunststoff, beispielsweise ABS (AcrylnitrilButadien-Styrol) oder PP (Polyethylen), gebildet sein. Sie kann mit einem einstückig ausgebildeten, geschlossenen oder geschlitzten Ringkörper hergestellt oder aus Ringsegmenten zusammengesetzt sein. Der Grundkörper kann aus Metall, beispielsweise Messing, oder Kunststoff, beispielsweise PPSU (Polyphenylsulfon) hergestellt sein. Schließlich kann die Außenhülse aus Metall, beispielsweise Edelstahl, oder Kunststoff, beispielsweise PPSU (Polyphenylsulfon) hergestellt sein.

An dieser Stelle sei darauf hingewiesen, dass die erfindungsgemäße Steckkupplung in unterschiedlichster Kombination eingesetzt werden kann. Beispielsweise kann sie dazu verwendet werden, ein Rohr an eine übergeordnete Baueinheit anzuschließen. Ebenso ist es möglich, zwei Rohre miteinander zu verbinden, wobei die Verbindung geradlinig oder unter einem vorbestimmten Winkel, beispielsweise 90°, erfolgen kann. Auch ist die Verbindung von mehr als zwei Rohren möglich, beispielsweise mittels eines T- oder Stern-förmigen Verbindungsstücks. Zudem brauchen bei der Verbindung von zwei oder mehr Rohren nicht alle an dem Verbindungsstück ausgebildeten Kupplungen erfindungsgemäße Steckkupplungen zu sein.

Die Erfindung betrifft ferner eine Kupplungseinrichtung zum Verbinden von wenigstens zwei Rohren unter Einsatz einer entsprechenden Anzahl erfindungsgemäßer Steckkupplungen, bei welcher die Grundkörper der Steckkupplungen miteinander einstückig ausgebildet sind.

Die Erfindung wird im Folgenden anhand der beigefügten Zeichnung an Ausführungsbeispielen näher erläutert werden. Es stellt dar:
- Figur 1: eine perspektivische Explosionsdarstellung einer Kupp- lungsvorrichtung zur geradlinigen Verbindung zweier Rohre unter Verwendung von zwei erfindungsgemäßen Steckkupplungen gemäß einer ersten Ausführungsform;
- Figur 1a: eine perspektivische Darstellung eines Schieberings, der alternativ zu dem in Figur 1 dargestellten Schiebering bei der erfindungsgemäßen Kupplungsvorrichtung verwendet werden kann.
- Figur 2: eine Schnittansicht der Kupplungsvorrichtung gemäß Figur 1; und
- Figuren 3 und 4: Ansichten ähnlich Figuren 1 und 2 einer zweiten Ausfüh- rungsform.

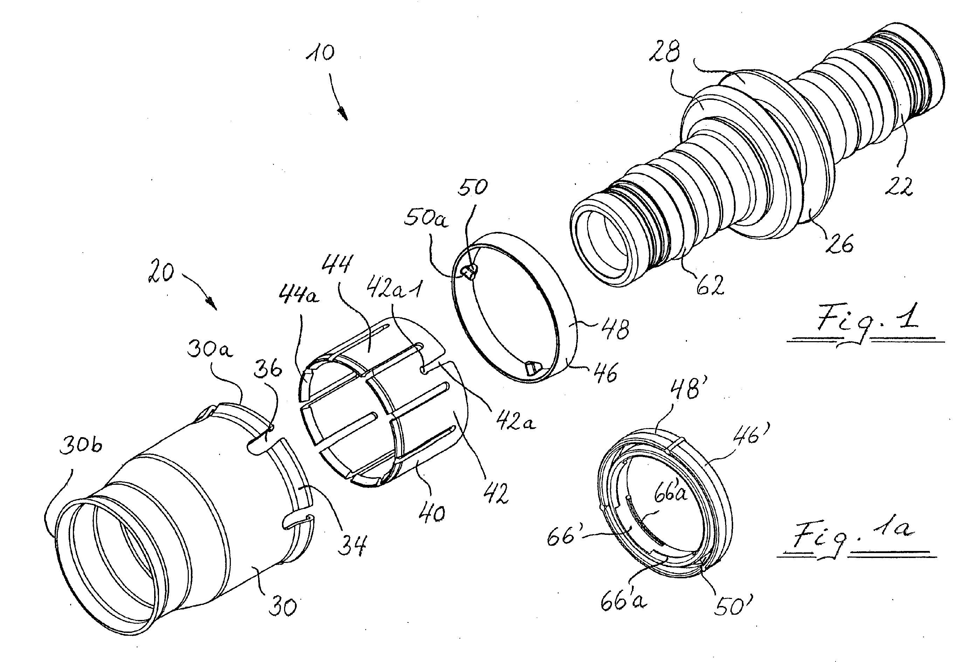

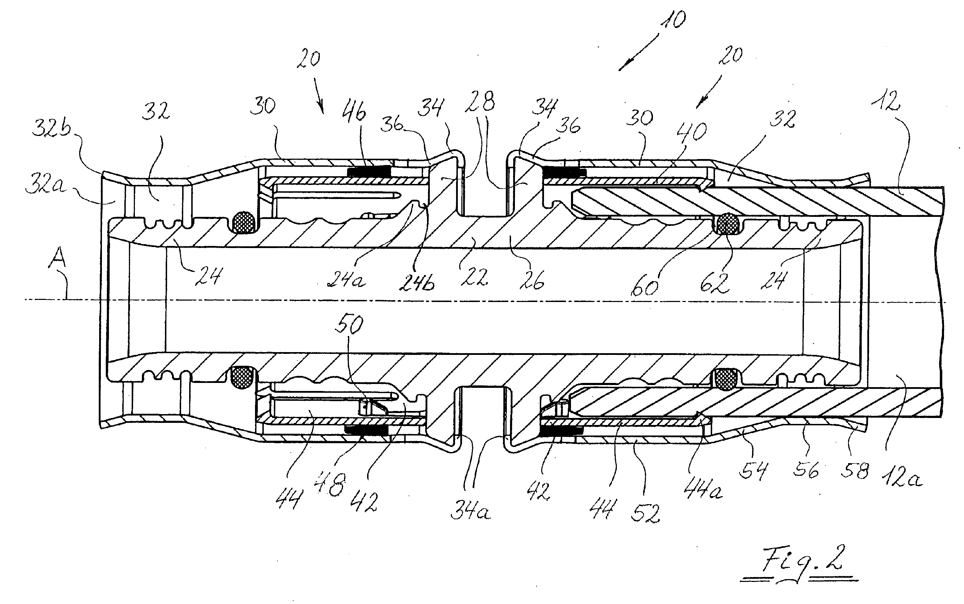

In den Figuren 1 und 2 ist eine Kupplungsvorrichtung 10 dargestellt, welche zum geradlinigen Verbinden zweier Rohre 12 dient, von denen in Figur 2 lediglich eines dargestellt ist. Die Kupplungsvorrichtung umfasst hierzu zwei erfindungsgemäße Steckkupplungen 20, von denen in Figur 1 lediglich eine dargestellt ist. Die beiden Steckkupplungen 20 sind identisch ausgebildet und lediglich zueinander spiegelverkehrt angeordnet.

Die Steckkupplung 20 umfasst einen Grundkörper 22 mit einem Rohrstutzen 24, der in dem in Figur 2 rechts dargestellten, mit dem Rohr 12 verbundenen Zustand in das Lumen 12a des Rohres 12 eingreift. Der Rohrstutzen 24 ist mit einem Basisteil 26 des Grundkörpers 22 einstückig ausgebildet, wobei am Übergang von dem Rohrstutzen 24 zu dem Basisteil 26 eine Ringrippe 28 vorgesehen ist.

Die Steckkupplung 20 umfasst ferner eine Außenhülse 30, die zusammen mit dem Rohrstutzen 24 einen Aufnahmeraum 32 für das Rohr 12 umgrenzt, d.h. die Außenhülse 30 umgreift das Rohr 12 von außen. Zur Befestigung der Außenhülse 30 an dem Grundkörper 22 hintergreifen Eingriffselemente 34 der Außenhülse 30 die Ringrippe 28. Zur Ausbildung dieser Eingriffselemente 34 sind in die Außenhülse 30 von ihrem inneren Längsende 30a (siehe Figur 1) her Einbuchtungen 36 eingebracht, welche zwischen sich die Eingriffselemente 34 als Stege ausbilden. Die Enden 34a dieser Stege sind nach innen umgebogen, um die Ringrippe 28 hintergreifen zu können. In Folge der Einbuchtungen 36 verfügen die Eingriffselemente 34 über eine ausreichende Elastizität, um in bezogen auf die Längsachse A radialer Richtung so weit aufgeweitet werden zu können, dass sie auf das Basisteil 26 bzw. dessen Ringrippen 28 des Grundkörpers 22 aufgeschoben werden können, wo sie dann die Ringrippe 28 hintergreifen.

In dem Aufnahmeraum 32 ist ferner eine Klemmvorrichtung 40 angeordnet, die im vorliegenden Ausführungsbeispiel als insgesamt im Wesentlichen zylindrische Klemmhülse ausgebildet ist. Die Klemmhülse 40 weist einen Basiszylinder 42 und eine Mehrzahl von vom Basiszylinder 42 ausgehenden Armen 44 auf. Am freien Ende jedes Arms 44 ist ein von diesem nach radial innen abstehendes widerhakenartiges Klemmelement 44a ausgebildet. Der Durchmesser der Klemmhülse 40 und die Erstreckung der Klemmelemente 44a sind derart bemessen, dass die Klemmelemente 44a beim Einschieben des Rohres 12 in den Aufnahmeraum 32 durch das Rohr 12 nach radial außen ausgelenkt werden. Dabei erfahren die Arme 44 eine Vorspannung, die die Klemmelemente 44a in die Außenumfangsfläche des Rohres 12 hineinzudrücken versucht. Der Widerhakeneffekt wird dann noch verstärkt, wenn man versucht, das Rohr 12 wieder aus der Aufnahme 32 herauszuziehen.

Schließlich umfasst die Steckkupplung 20 auch noch eine Schiebevorrichtung 46, die in dem dargestellten Ausführungsbeispiel als Schiebering ausgebildet ist. Der Schiebering 46 umfasst einen im Wesentlichen zylindrischen Basisring 48, von dem eine Mehrzahl von Vorsprüngen 50 nach radial innen absteht. Wie man am besten in Figur 2 links erkennt, ist der Schiebering 46 in dem für das Einschieben eines Rohrs 12 vorbereiteten Zustand der Steckkupplung 20 auf die Klemmhülse 40 aufgeschoben. Er ist also radial zwischen der Klemmhülse 40 und der Außenhülse 30 angeordnet. Die Vorsprünge 50 greifen in Schlitze 42a ein, die von dem dem offenen Ende 32a des Aufnahmeraums 32 abgewandten Ende der Klemmhülse 40 bzw. deren Basiszylinder 42 ausgehen. Am Ende dieser Schlitze 42a sind Rasterweiterungen 42a1 ausgebildet, mit denen Rastköpfe 50a der Vorsprünge 50 des Schieberings 46 verrastet werden können. Durch diese Verrastung kann sichergestellt werden, dass sich der Schiebering 46 in der gewünschten Ausgangsstellung befindet, wenn das Rohr 12 in den Aufnahmeraum 32 eingeführt wird.

Wird ein Rohr 12 in den Aufnahmeraum 32 eingeführt, so gelangt es in Anlage an die Vorsprünge 50 bzw. deren Rastköpfe 50a, löst den Schiebring 46 aus seiner verrasteten Ausgangsstellung und nimmt ihn bei der weiteren Einführbewegung mit, bis dieser mit seinem Basisring 48 an der Ringrippe 28 anliegt (siehe Figur 2 rechts unten). In dieser Anlagestellung, in der auch die Klemmhülse 40 an der Ringrippe 28 anliegt, erfüllt der Schiebering 46 mehrere Funktionen:
Zum einen sind der Schiebering 46, die Klemmhülse 40 und die Außenhülse 30 derart aufeinander abgestimmt ausgebildet, dass sich der Schiebering 46 in der Anlagestellung zwischen die Klemmhülse 40 und die Außenhülse 30 einspreizt und so die Klemmhülse 40 in ihrer Lage fixiert. Dadurch kann sich die Klemmhülse 40 bereits in dieser Anlagestellung einem unerwünschten Herausziehen des Rohrs 12 aus dem Aufnahmeraum 32 widersetzen. In dem dargestellten Ausführungsbeispiel erweitert sich der Basisring 48 von dem freien Ende 32a des Aufnahmeraums 32 zur Ringrippe 28 hin. Hierdurch kann er in der Anlagestellung mit seinem erweiterten Ende eine Erweiterung der Eingriffselemente 34 der Außenhülse 30 hintergreifen und sich daran verrasten, so dass er von der Außenhülse 30 nicht nur kraftschlüssig, sondern auch formschlüssig in der Anlagestellung gehalten wird.

Zum anderen erkennt man in Figur 2, dass der Schiebering 46 in seiner Ausgangsstellung (siehe Figur 2 links) die Einbuchtungen 36 zwischen den Eingriffselementen 34 nicht überlappt, während er sie in der Anlagestellung (siehe Figur 2 rechts) überlappt und somit für das Auge eines Betrachters, beispielsweise eines Installateurs frei liegt. Auf diese Weise kann eine optische Anzeige dafür bereitgestellt werden, dass das Rohr 12 vollständig und ordnungsgemäß in den Aufnahmeraum 32 eingeführt worden ist. Diese Anzeige kann durch einen hohen Kontrast zwischen der Farbe des Schieberings 46 und der Farbe der Außenhülse 30 besonders gut erkennbar gemacht werden.

In Fig. 1a ist eine alternative Ausführungsform eines Schieberings 46' dargestellt, der anstelle des Schieberings 46 gemäß Fig. 1 unter Beibehaltung sämtlicher sonstiger konstruktiver Merkmale der Ausführungsform gemäß Fig. 1 eingesetzt werden kann. Wie der Schiebering 46 gemäß Fig. 1 umfasst auch der Schiebering 46' gemäß Fig. 1a einen Basisring 48', von dem nach radial innen eine Mehrzahl von Vorsprüngen 50' ausgeht. An den freien Enden der Vorsprünge 50' ist im Unterschied zur Ausführungsform gemäß Fig. 1 ein weiterer Ring 66' vorgesehen, der zum Eingriff mit dem freien Ende des in den Aufnahmeraum 32 eingeführten Rohrs 12 dient. An der radial inneren Umfangsfläche dieses weiteren Rings 66' ist eine Mehrzahl von radial nach innen vorstehenden Vorsprüngen 66'a vorgesehen, die alternierend an dem vorderen bzw. dem hinteren Axialende des weiteren Rings 66' angeordnet sind. In dem dargestellten Ausführungsbeispiel sind sechs derartige Vorsprünge 66'a vorhanden, wobei drei am axial vorderen Ende und drei am axial hinteren Ende des weiteren Rings 66' ausgebildet sind. Diese Vorsprünge dienen zusammen mit einer Ringrippe 24a (siehe Fig. 2), die eine Rastausnehmung 24b begrenzt, zur Verrastung des Schieberings 46' in dessen Anlagestellung am Grundkörper 22. Dabei kann diese Verrastung zusätzlich oder alternativ zu der vorstehend am Beispiel des Schieberings 46 gemäß Fig. 1 beschriebenen Verrastung in der Anlagestellung vorgesehen sein. Die Tatsache, dass sowohl am axial vorderen Ende des weiteren Rings 66' als auch an dessen axial hinterem Ende derartige Vorsprünge 66'a vorgesehen sind, erleichtert die Montage des Schieberings 46', da die vorstehend beschriebene Verrastung des Schieberings 46' in dessen Anlagestellung am Grundkörper 22 unabhängig von dessen Orientierung bereitgestellt werden kann.

Die Außenhülse 30 verfügt - von ihrem inneren Längsende 30a zu ihrem dem offenen Ende 32a des Aufnahmeraums 32 entsprechenden äußeren Längsende 32b hin - im Anschluss an die Eingriffselemente 34 über einen im Wesentlichen zylindrischen Abschnitt 52 größeren Durchmessers, einen sich vorzugsweise konisch verjüngenden Abschnitt 54, einen im Wesentlichen zylindrischen Abschnitt 56 kleineren Durchmessers, und schließlich über einen sich vorzugsweise konisch erweiternden Abschnitt 58. Innerhalb des im Wesentlichen zylindrischen Abschnitts 52 größeren Durchmessers sind die vorstehend erläuterten Funktionsteile, insbesondere die Klemmhülse 40 und der Schiebering 46 mit radialem Spiel aufgenommen, während der im Wesentlichen zylindrische Abschnitt 56 kleineren Durchmessers der Führung des Rohrs 12 dient.

Der sich verjüngende Abschnitt 54 stellt hauptsächlich den Übergang zwischen den beiden zylindrischen Abschnitten 52 und 56 her. Daneben hat er aber auch noch eine Notfallfunktion. Sollte wider Erwarten auf das Rohr 12 eine so hohe Auszugskraft ausgeübt werden, dass die vom Schiebering 46 ausgehende Klemmkraft nicht ausreicht, um die Klemmhülse 40 in der Anlagestellung zu halten, so treten die Klemmelemente 44a mit der schrägen Innenfläche des Abschnitts 54 in Eingriff und werden durch die von dieser ausgehende Keilwirkung noch stärker in Eingriff mit dem Rohr 12 gedrängt, so dass sie auf dieses eine noch stärkere Haltekraft ausüben, die sich der Auszugsbewegung widersetzt.

Der sich erweiternde Abschnitt 58 schließlich dient als Einweisungsschräge der Erleichterung des Einführens des Rohrs 12 in den Aufnahmeraum 32.

Nachzutragen ist noch, dass in einer Ringnut 60 des Grundkörpers 22 ein Dichtungselement 62 aufgenommen ist, das im dargestellten Ausführungsbeispiel als O-Ring ausgeführt ist. Dieses Dichtungselement 62 sorgt im Zusammenwirken mit dem Rohrstutzen 24 und dem Rohr 12 für die gewünschte Dichtigkeit der Steckkupplung 20. Grundsätzlich können auch zwei oder mehr Dichtungselemente vorgesehen sein.

Nachzutragen ist ferner, dass bei Einsatz zweier Steckkupplungen 20 zur Verbindung zweier Rohre 12 in einer Kupplungseinrichtung 10 die Grundkörper 22 der beiden Steckkupplungen 20 vorzugsweise miteinander einstückig ausgebildet sind.

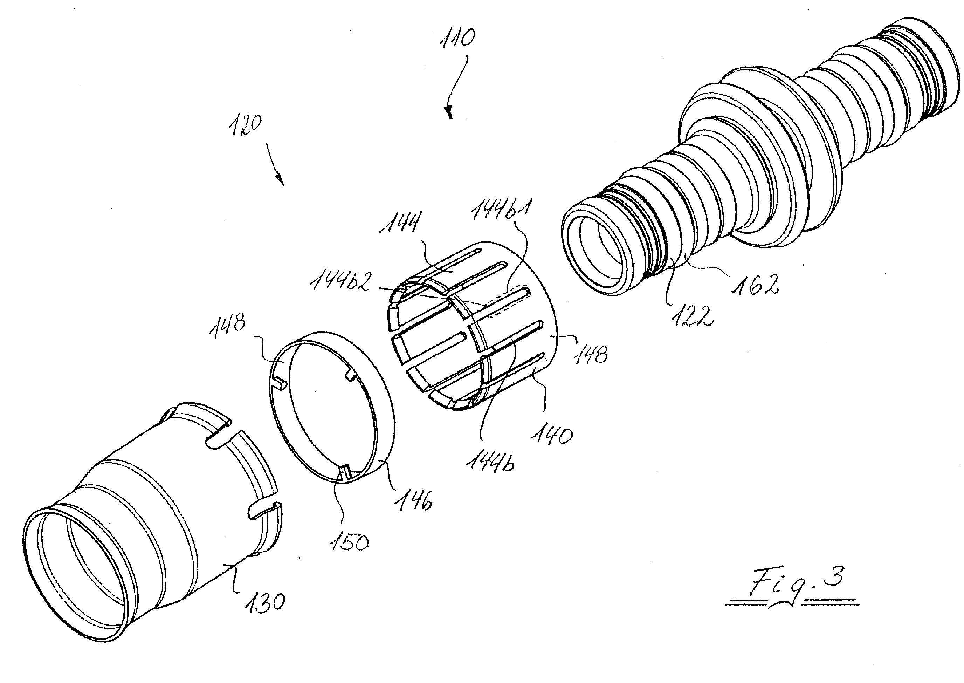

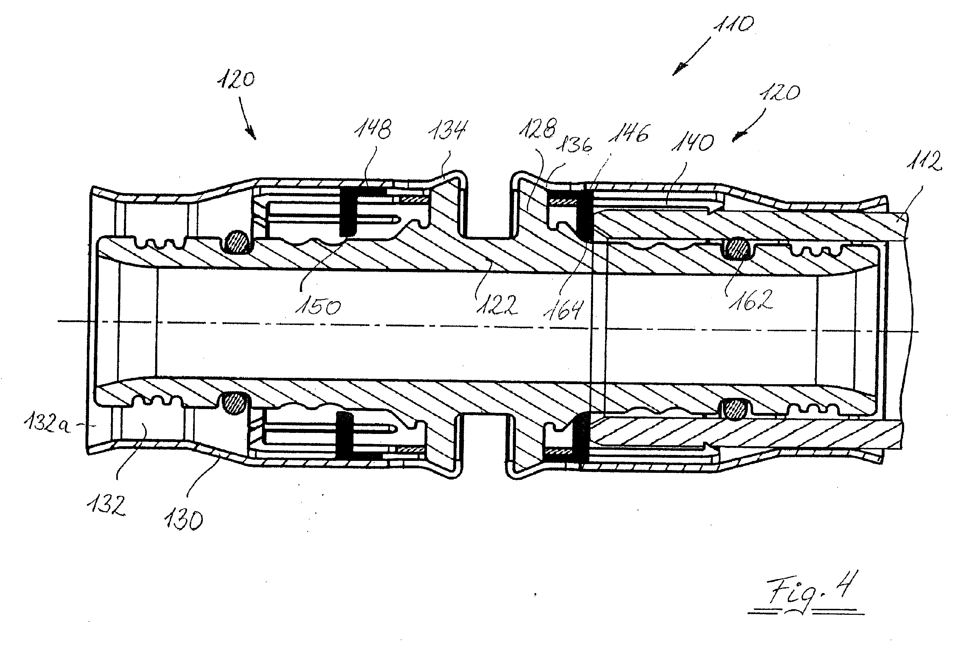

In den Figuren 3 und 4 ist eine weitere Kupplungsvorrichtung dargestellt, welche mit Steckkupplungen einer zweite Ausführungsform der Erfindung ausgebildet ist, welche im Wesentlichen der ersten Ausführungsform entspricht. Daher sind in den Figuren 3 und 4 analoge Teile mit den gleichen Bezugszeichen versehen wie in den Figuren 1 und 2, jedoch vermehrt um die Zahl 100. Darüber hinaus wird die Ausführungsform gemäß Figuren 3 und 4 im Folgenden nur insoweit beschrieben werden als sie sich von der Ausführungsform gemäß Figuren 1 und 2 unterscheidet, auf deren Beschreibung hiermit ansonsten ausdrücklich verwiesen sei.

Die Steckkupplung 120 der in Figuren 3 und 4 dargestellten Kupplungseinrichtung 110 unterscheidet sich von der Steckkupplung 20 gemäß Figuren 1 und 2 lediglich hinsichtlich der Ausbildung der Klemmhülse 140 und des Schieberings 146, während der Grundkörper 122 einschließlich der Dichtungsvorrichtung 162 und die Außenhülse 130 identisch ausgebildet sind.

Der Hauptunterschied zwischen den beiden Ausführungsformen besteht darin, dass der Schiebering 146 vom offenen Ende 132a des Aufnahmeraums 132 her auf die Klemmhülse 140 aufgeschoben ist. Dabei greifen die Vorsprünge 150 in die Schlitze 144b ein, welche die Klemmelemente 144 voneinander trennen. Dies hat den Vorteil, dass der Schiebering 146 die Klemmhülse 140 nicht nur kraftschlüssig, sondern auch formschlüssig in der Anlagestellung sichern kann. Ist der Basisring 148, der in dieser Ausführungsform überdies in Umfangsrichtung durchgehend ausgebildet ist, analog zum Basisring 48 sich auf die Ringrippe 128 zu erweiternd ausgebildet, so muss nicht nur die Klemmkraft zwischen Außenhülse 130, Schiebering 146 und Klemmhülse 140 überwunden werden, um das Rohr 112 aus dem Aufnahmeraum 132 herausbewegen zu können, sondern auch die Verrastung zwischen dem Schiebering 146 und den Eingriffselementen 134 gelöst werden. Dies erhöht die Sicherheit gegen ein unerwünschtes Herausziehen des Rohrs 112 aus dem Aufnahmeraum 132.

Um auch bei dieser Ausführungsform sicherstellen zu können, dass sich der Schiebering 146 in der gewünschten Ausgangsstellung befindet, wenn das Rohr 112 in den Aufnahmeraum 132 eingeführt wird, können die den Vorsprüngen 150 zugeordneten Schlitze 144b, wie dies in Figur 3 für einen dieser Schlitze bei 144b1 gestrichelt angedeutet ist, mit einer Erweiterung ausgebildet sein, die an die Vorsprünge 150 angepasst ist. Überdies kann an dem dem freien Ende der Schlitze 144b eine Verrastung 144b2 vorgesehen sein. Ferner kann der Schiebering 146, wie in Figur 2 bei 164 angedeutet, auch an dem Grundkörper 122 verrastbar sein.

Hinsichtlich der weiteren Details der Ausbildung von Schiebering 146 und Klemmhülse 140 sei auf die Beschreibung der Ausführungsform gemäß Figuren 1 und 2 verwiesen.

## Patentansprüche

1. Steckkupplung (20; 120) für ein Rohr (12; 112), umfassend:
- einen Grundkörper (22; 122)
- mit einem Rohrstutzen (24), der zum Einführen in einen Endabschnitt des Rohrs (12; 112) bestimmt ist, und
- mit einer Ringschulter (28; 128), welche an einem dem freien Ende (24a) des Rohrstutzens (24) abgewandten Ende des Rohrstutzens (24) vorgesehen ist,
- eine Außenhülse (30; 130), die zumindest teilweise um den Grundkörper (22; 122) herum angeordnet ist und mit diesem einen Aufnahmeraum (32; 132) bildet, in welchen das Rohr (12; 112) einführbar ist,
- eine Klemmvorrichtung (40; 140) mit wenigstens einem Klemmelement (44; 144), welches dazu bestimmt ist, mit einem in den Aufnahmeraum (32; 132) eingeführten Rohr (12; 112) von außen derart in Eingriff zu treten, dass es sich einer Bewegung des Rohrs (12; 112) aus dem Aufnahmeraum (32; 132) heraus widersetzt, und
- eine Schiebevorrichtung (46; 146), welche durch ein in den Aufnahmeraum (32; 132) eingeführtes Rohr (12; 112) in eine Anlagestellung überführbar ist, in welcher sie an der Ringschulter (28; 128) des Grundkörpers (22; 122) anliegt, wobei die Schiebevorrichtung (46; 146) in der Anlagestellung an dem Grundkörper (22; 122) oder/und der Außenhülse (30; 130) verrastbar ist,
wobei die Außenhülse (30; 130) wenigstens eine Öffnung (36; 136) aufweist, welche in dem auf dem Grundkörper (22; 122) montierten Zustand der Außenhülse (30; 130) der Ringschulter (28; 128) benachbart angeordnet ist, wobei die Öffnung (36; 136) derart bemessen ist, dass die Schiebevorrichtung (46; 146) dann, wenn sie sich in ihrer Anlagestellung befindet, die Öffnung (36; 136) zumindest teilweise überlappt, wobei die Schiebevorrichtung (46; 146) oder/und die Außenhülse (30; 130) aus Kunststoff gefertigt sind, und wobei der Kontrast zwischen Schiebevorrichtung (46; 146) und Außenhülse (30; 130) durch eine entsprechende Wahl der Farben von Schiebevorrichtung (46; 146) und Außenhülse (30; 130) sichergestellt ist.

2. Steckkupplung nach Anspruch 1,
**dadurch gekennzeichnet, dass** die Schiebevorrichtung (46; 146) einen in Umfangsrichtung verlaufenden Körper (48; 148) umfasst, sowie wenigstens einen von dem Körper (48; 148) ausgehenden Vorsprung (50; 150), der beispielsweise zum Eingriff mit dem Rohr (12; 112) bestimmt ist.

3. Steckkupplung nach Anspruch 2,
**dadurch gekennzeichnet, dass** der Körper (48; 148) der Schiebevorrichtung (46; 146) radial zwischen der Klemmvorrichtung (40; 140) und der Außenhülse (30; 130) angeordnet ist, wobei der wenigstens eine von dem Körper (48; 148) ausgehende Vorsprung (50; 150) eine zugeordnete Durchbrechung (42a; 144b) der Klemmvorrichtung (40; 140) durchsetzt.

4. Steckkupplung nach Anspruch 2 oder 3,
**dadurch gekennzeichnet, dass** an dem freien Ende wenigstens eines Vorsprungs (50') ein weiterer in Umfangsrichtung verlaufender Körper (66') angeordnet ist.

5. Steckkupplung nach einem der Ansprüche 1 bis 4,
**dadurch gekennzeichnet, dass** die Schiebevorrichtung (46; 146) an der Klemmvorrichtung (40; 140) in einer Ausgangsstellung verrastbar ist, aus welcher es durch das Rohr (12; 112) bei dessen Einführung in den Aufnahmeraum (32; 132) herausbewegbar ist.

6. Steckkupplung nach einem der Ansprüche 1 bis 5,
**dadurch gekennzeichnet, dass** im Grundkörper (22) eine Rastausnehmung (24b) vorgesehen ist, mit welcher die Schiebevorrichtung (46'), vorzugsweise wenigstens einer der Vorsprünge der Schiebevorrichtung oder wenigstens ein Abschnitt (66'a) des weiteren in Umfangsrichtung verlaufenden Körpers (66'), verrastbar ist.

7. Steckkupplung nach einem der Ansprüche 1 bis 6,
**dadurch gekennzeichnet, dass** die Außenhülse (30; 130) zwischen ihrem freien Ende (30b) und ihrem mit dem Grundkörper (22; 122) verbundenen Ende (30a) einen sich zum freien Ende (30b) hin verjüngenden Abschnitt (54) aufweist.

8. Steckkupplung nach einem der Ansprüche 1 bis 7,
**dadurch gekennzeichnet, dass** die Außenhülse (30; 130) ihrem freien Ende (30b) benachbart einen im Wesentlichen zylindrisch ausgebildeten Abschnitt (56) aufweist.

9. Steckkupplung nach einem der Ansprüche 1 bis 8,
**dadurch gekennzeichnet, dass** die Außenhülse (30; 130) an ihrem freien Ende (30b) einen sich zum freien Ende hin erweiternden Abschnitt (58) aufweist.

10. Steckkupplung nach einem der Ansprüche 1 bis 9,
**dadurch gekennzeichnet, dass** die Außenhülse (30; 130) an ihrem von ihrem freien Ende (30b) abgewandten, anderen Ende (30a) mit wenigstens einem Eingriffselement (34; 134) ausgebildet ist, welches zum Eingriff mit dem Grundkörper (22; 122) bestimmt ist.

11. Steckkupplung nach einem der Ansprüche 1 bis 10,
**dadurch gekennzeichnet, dass** die Schiebevorrichtung (46; 146) einen einstückig ausgebildeten, geschlossenen Ringkörper umfasst.

12. Steckkupplung nach einem der Ansprüche 1 bis 11,
**dadurch gekennzeichnet, dass** der Grundkörper (22; 122) aus Kunststoff hergestellt ist.

13. Steckkupplung nach einem der Ansprüche 1 bis 12,
**dadurch gekennzeichnet, dass** die Klemmvorrichtung (40; 140) aus Metall gebildet ist.

14. Kupplungseinrichtung (10; 110) zum Verbinden von wenigstens zwei Rohren (12; 112) unter Verwendung einer entsprechenden Anzahl von Steckkupplungen (20; 120) nach einem der vorhergehenden Ansprüche, **dadurch gekennzeichnet, dass** die Grundkörper (22; 122) der Steckkupplungen (20; 120) miteinander einstückig ausgebildet sind.
